# EUROPEAN PATENT APPLICATION

(11) **EP 4 086 023 A1**
(43) Date of publication of application: **09.11.2022**
(21) Application number: 21172490.1
(22) Date of filing: 06.05.2021
(51) Int. Cl.: B22F 10/47, B22F 5/10, B22F 10/14, B33Y 10/00, B33Y 40/20, B22F 3/10

(54) **METHOD FOR ADDITIVELY MANUFACTURING AN ARTICLE COMPRISING A GROOVE**

(71) Applicant: Sandvik Machining Solutions AB, 811 81 Sandviken (SE)
(72) Inventor: GRANDIN, Lisa, SE-811 81 Sandviken (SE); PERSSON, George, 811 81 Sandviken (SE)
(74) Representative: Sandvik

(57) **Abstract**

Disclosed is a method for manufacturing an article comprising a groove. The method comprises obtaining (202) a model of an article to be manufactured, the article comprising a groove, the groove comprising two sides with a gap in between. The method further comprises adapting (204) the model by adding a support connecting the sides of the groove, and additively manufacturing (206) the article based on the adapted model. The method further comprises removing (207) loose powder from the groove, sintering (208) the additively manufactured article, and removing (210) the support, thus obtaining a manufactured article.

## Description

### Technical field

The present disclosure relates generally to methods and systems for additively manufacturing an article comprising a groove, particularly using binder jetting technology.

### Background

Additive manufacturing, also known as 3D printing, generally involves manufacturing, or printing, one layer at a time using specialized systems. In particular, a layer of powder material may be deposited on the working surface of a build chamber and bonded with another layer of the same or of a different material. Additive manufacturing may be used to manufacture articles from computer-aided design models using techniques such as binder jetting.

After the additive manufacturing steps have been performed and the powder composition has been shaped and bonded together, a green body is obtained. The green body is then subjected to sintering, in which heat and/or pressure is applied to the green body. During the sintering process, powder particles are fused together which results in densification, and may also entail shrinking and/or deformation, which can negatively impact the resulting article.

One case where such deformation is especially relevant is when the article to be manufactured comprises a groove. If the groove is subjected to too much deformation, the function of the article may be compromised.

Today, the way to handle the issue of deformations which occur during the sintering of the green body is to compensate for the deformation beforehand, e.g. by changing the dimensions of the article before it is additively manufactured. However, this is very difficult, and requires very detailed knowledge about exactly how and how much the article will deform.

It would be beneficial to provide a better way to additively manufacture articles comprising grooves, such that the deformation occurring during sintering is decreased.

Consequently, there exists a need for improvement when it comes to manufacturing articles comprising grooves using additive manufacturing technologies.

### Summary

It is an article of the invention to address at least some of the problems and issues outlined above. An article of embodiments of the invention is to provide a way to manufacture an article comprising a groove in such a way that deformation occurring during sintering, particularly deformation of the groove, is decreased.

According to one aspect, a method for manufacturing an article comprising a groove is provided. The method comprises obtaining a model of an article to be manufactured, the article comprising a groove, the groove comprising two sides with a gap in between. The method further comprises adapting the model by adding a support connecting the sides of the groove, additively manufacturing the article based on the adapted model, and removing loose powder from the groove. The method further comprises sintering the additively manufactured article and removing the support, thus obtaining a manufactured article.

According to another aspect, an additive manufacturing system operable for additively manufacturing an article comprising a groove is provided. The additive manufacturing system comprises an additive manufacturing device, processing circuitry and a memory, the memory containing instructions executable by said processing circuitry. The additive manufacturing system is operative for obtaining a model of an article to be manufactured, the article comprising a groove, the groove comprising two sides with a gap in between, and adapting the model by adding a support connecting the sides of the groove. The additive manufacturing system is further operative for additively manufacturing the article based on the adapted model and removing loose powder from the groove. The additive manufacturing system is further operative for sintering the additively manufactured article and removing the support, thus obtaining a manufactured article.

According to other aspects, computer programs and carriers are also provided, the details of which will be described in the claims and the detailed description.

Further possible features and benefits of this solution will become apparent from the detailed description below.

### Brief description of drawings

The solution will now be described in more detail by means of exemplary embodiments and with reference to the accompanying drawings, in which:
Figs. 1 to 6 show an article comprising a support according to different embodiments.
Fig. 7 is a flow chart of a method for manufacturing an article according to an embodiment.
Fig. 8 is a block schematic of parts of an additive manufacturing system according to an embodiment.

### Detailed description

Briefly described, the present disclosure relates to a method for manufacturing an article comprising a groove, using additive manufacturing technologies. The method comprises obtaining a model of an article with a groove, and adapting the model by adding a support which connects the sides of the groove, thus obtaining an adapted model which comprises the support as part of the article. The method further comprises additively manufacturing the article based on the adapted model, sintering the article, and then removing the support, thus obtaining a finished article without the support part.

The present disclosure builds upon the realization that articles comprising grooves may be better manufactured by adding a support which connects the sides of the grooves during the additive manufacturing, sintering the article with the support present, and then removing the support after the article has been sintered. The purpose of the support is to reduce deformation of the article, particularly of the groove, and achieve more linear shrinkage during sintering. Preferably, the deformation should be as low as possible.

When grooves are deformed during the sintering process, machining of the grooves are usually required afterwards. By using methods as disclosed herein, it becomes possible or at least easier to additively manufacture articles with grooves, in a way that requires much less or even no machining of the grooves themselves after sintering.

The support may be seen as a sintering support, adapted to support the article during sintering, as opposed to a support used to support the article during the additive manufacturing steps.

The methods and systems disclosed herein are suitable for using on virtually any article comprising a groove, manufactured using additive manufacturing technologies, particularly when using binder jetting technology.

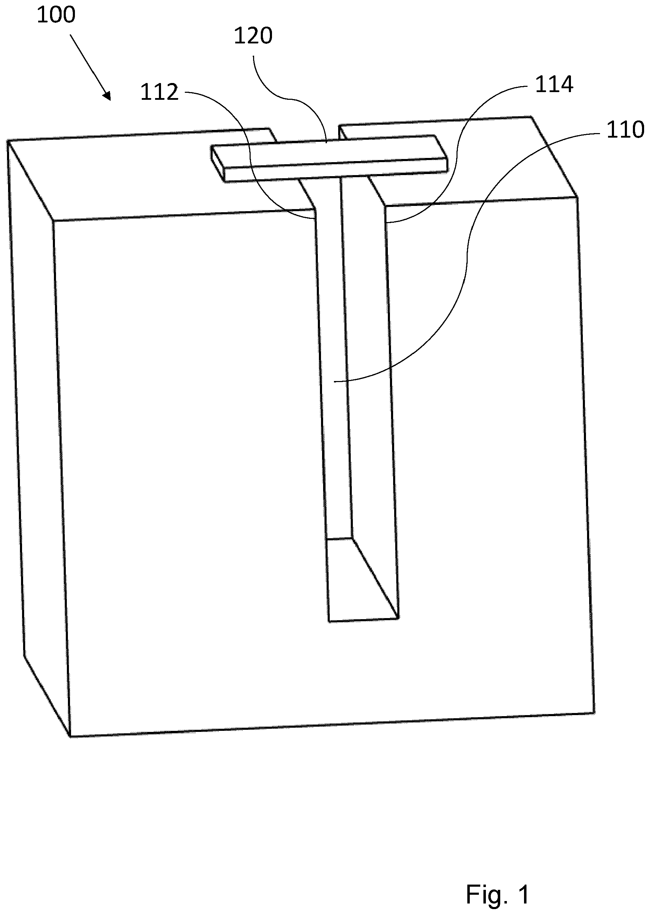

Looking now at Fig. 1, a modified article comprising a support according to an embodiment is shown.

The modified article 100 comprises a groove 110, the groove 110 comprising a first side 112 and a second side 114, with a gap in between. The modified article 100 further comprises a support 120 connecting the sides of the groove, wherein the support 120 is intended to be removed after the sintering of the article, and is thus not intended to form a part of the finished article.

The size and position of the support 120 may be adapted based on the article to be manufactured. In case the width of the support is relatively small compared to the extension of the groove, as is the case in Fig. 1, the support 120 is preferably positioned in the center of the groove 110, as is the case in Fig. 1, in order to provide as much support as possible for the whole groove.

In some embodiments, such as the one shown in Fig. 1, the support 120 is positioned above the groove, such that the bottom of the support 120 is in line with the top of the article 100.

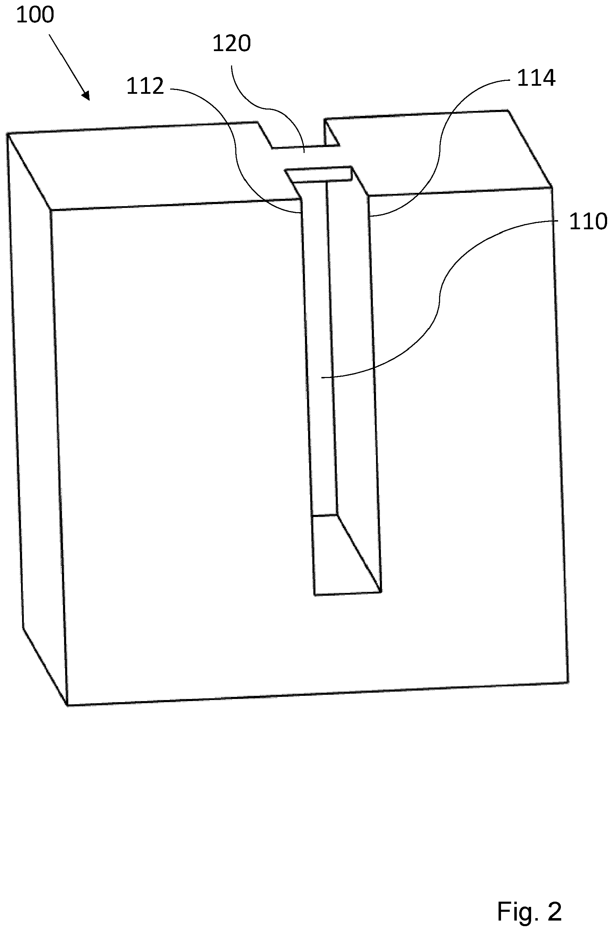

In some embodiments, such as the one shown in Fig. 2, the support 120 is positioned inside the groove, such that the top of the support 120 is in line with the top of the article 100.

In some embodiments, the support 120 is dimensioned to cover as much as possible of the groove. It would be desirable to cover the entire groove with a support, however, after the additive manufacturing process is completed, there will be loose powder inside the groove that needs to be removed. If the support were to cover the entire groove, the loose powder would not be removable, which would result in an article without any groove after the sintering has been performed. Thus, there is a need for the powder to be able to exit the groove at some place.

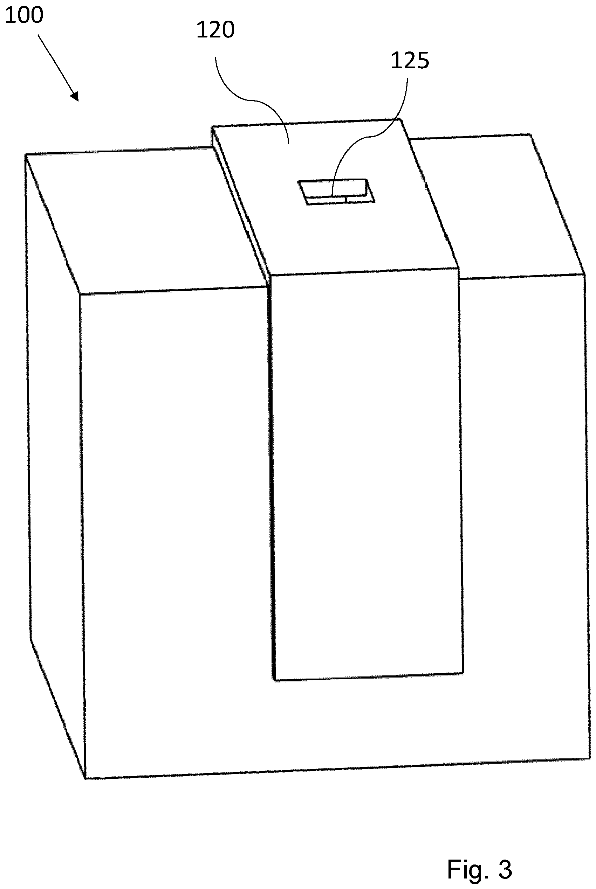

Fig. 3 shows an embodiment with a support 120 comprising a hole 125, the support 120 covering almost the entire groove (not shown in the figure since it is covered by the support 120) of the article 100. As can be seen, in the embodiment shown in Fig. 3, the hole 125 of the support 120, rather than the support 120 itself, is preferably positioned in the middle of the groove in this embodiment.

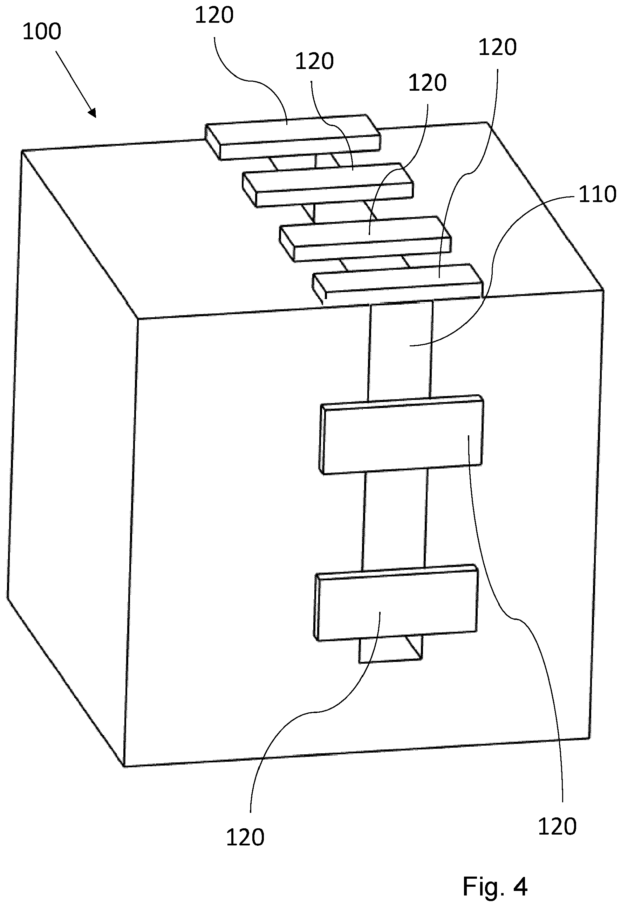

Fig. 4 shows another embodiment, comprising a plurality of supports 120 positioned along the groove 110. By having a plurality of relatively small supports positioned, preferably relatively uniformly, along the groove, a balance between structural support for the article, and holes for removing the powder may be achieved.

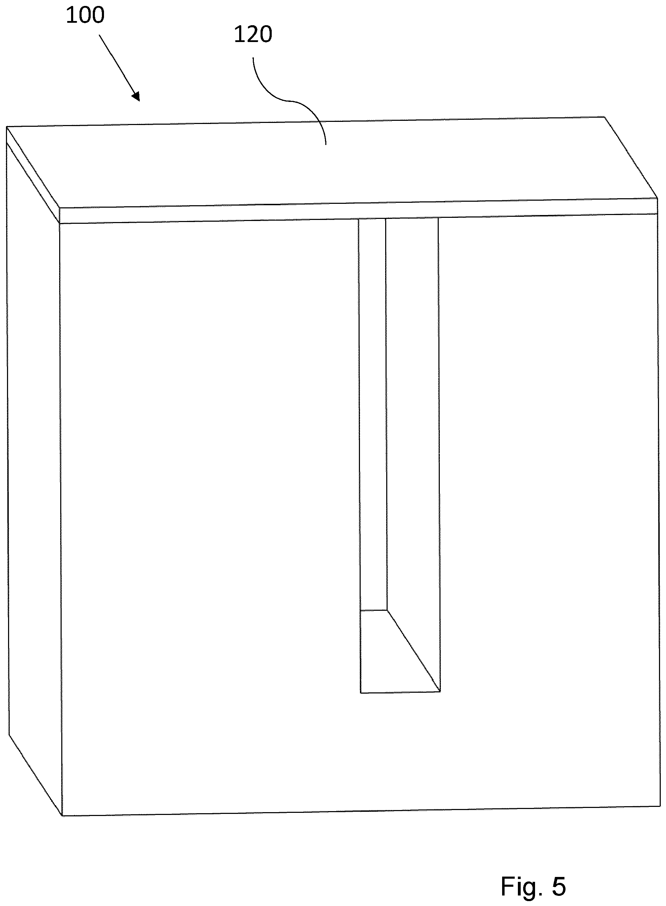

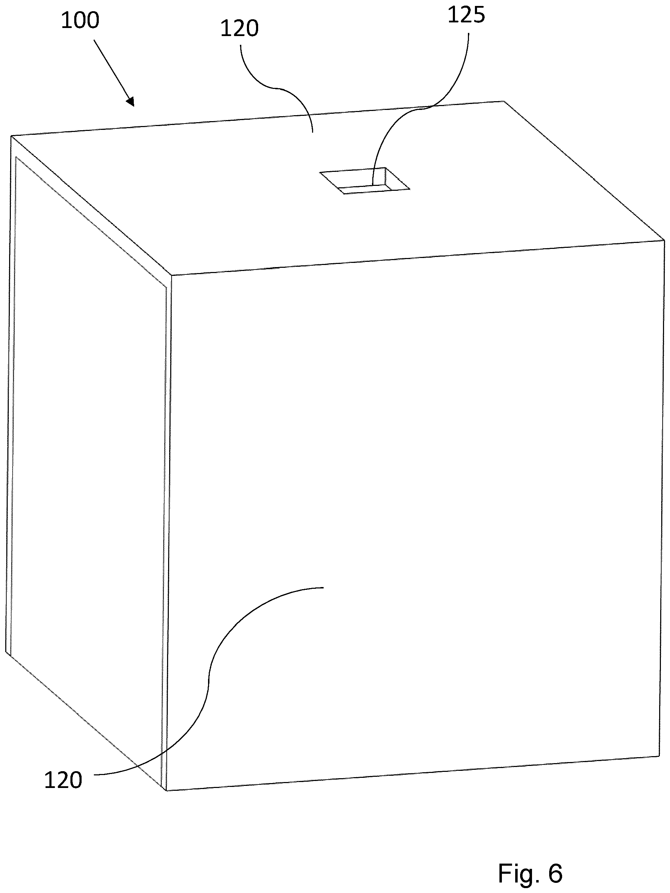

Looking now at Figs. 5 and 6, embodiments are shown in which the support 120 is adapted to provide a substantially flat surface of the adapted article in the planes in which the support extends. In some embodiments, the support is adapted to cover substantially all of the surface of the article in the same planes in which the support extends.

Fig. 5 shows an embodiment of the support of Fig. 1, wherein the support 120 covers the entire top surface of the article 100.

Fig. 6 shows an embodiment of the support of Fig. 2, wherein the support covers the entire top surface, as well as the surfaces of the front and back side of the article 100.

One reason for the embodiments shown in Figs. 5 and 6 is to provide a flat surface, which is easier to machine after the sintering has been performed and the support is to be removed. Whether or not an embodiment of Fig. 1 /Fig. 2 or of Fig 5/Fig. 6 would be employed may depend on which technology is used for removing the support 120 after the sintering.

In some embodiments, the groove of the article extends at least partly in a vertical direction, as seen during the additive manufacturing of the article. In some embodiments, the groove of the article extends in directions which are offset from the vertical direction by a maximum of 45 degrees. In some embodiments, the groove extends substantially only in the vertical direction.

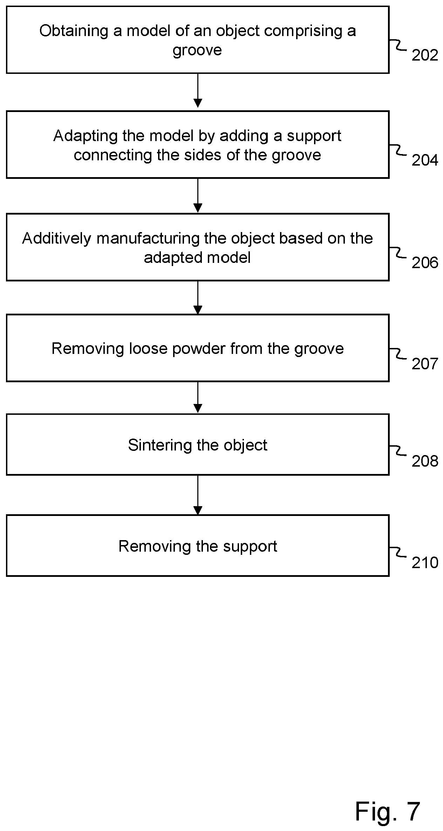

Looking now at Fig. 7, steps of a method for manufacturing an article comprising a groove according to an embodiment will now be described. The method may be a computer-implemented method. The method may be performed by an additive manufacturing system.

The method comprises obtaining 202 a model of an article, the article comprising a groove. The model may be any type of model useful for the purpose, such as CAD model. The model may be obtained in any applicable way, e.g. by using a CAD program for generating it, or by obtaining a CAD model generated elsewhere.

The method further comprises adapting 204 the model by adding a support connecting the sides of the groove. The model is preferably adapted using a software program for handling such models, e.g. a CAD program. By having a support which connects the sides of the groove, the groove will not be deformed to the same extent as otherwise, since the support counteracts and/or resists the forces which act to deform the article during the sintering process.

The method further comprises additively manufacturing 206 the article based on the adapted model. The step of additively manufacturing comprises using any relevant additive manufacturing technology in which powder is bonded together to form the article. Since the article is additively manufactured based on the adapted model, the resulting green body will be an adapted article comprising the added support.

The method further comprises removing 207 loose powder from the groove. The powder needs to be removed before the sintering, since otherwise it would be solidified during the sintering process. In embodiments wherein the support comprises a hole, the removal step 207 may comprise removing the loose powder through the hole in the support.

The method further comprises sintering 208 the adapted article, including the support. As previously described, the support will counteract, to at least some extent, the forces which cause deformation of the article, and particularly of the groove, during the sintering.

The method further comprises removing 210 the support, thus obtaining the finished article. Since the support is added during the additive manufacturing step, it naturally needs to be removed after the sintering in order to obtain the article, otherwise the resulting article would be a modified article comprising the support.

In some embodiments, the support may be used in an intermediate operation, such as turning or milling, before it is removed. Thus, in some embodiments the method may comprise using the support for an intermediate operation prior to removing 210 the support.

In some embodiments, the support is positioned above the gap of the groove, which may also be seen as above the groove, rather than inside it. By having the support positioned this way, it becomes easier to remove after the sintering has been performed. As will be understood, what is considered to be above the gap/groove changes depending on which direction the groove faces. For example, in Fig. 4, both visible supports positioned on the side of the article are also considered to be above the gap.

In some embodiments, the support is positioned inside of the gap, preferably as close to the top of the first and second side as possible. In some embodiments, the support is positioned inside the gap in such a way as to connect the first and second sides into a continuous surface without any differences, or at least with relatively small differences, in elevation. In some embodiments,

In some embodiments, the support covers a majority of the groove. The more of the groove that is covered by the support, the more it can counteract or resist deformation during sintering.

However, there may be other reasons for not wanting to cover the entire groove, for example that loose powder needs to be removed from the groove before the sintering. For this purpose, the support may in some embodiments comprise a hole. In some such embodiments, the hole of the support is positioned approximately in the middle of the support.

In some embodiments, the dimensions of the support are adapted based on the properties of the groove. The term properties of the groove encompass e.g. the size, including length, width and height of the groove, the direction of the groove, the placement of the groove on the article, the material properties of the powder of the article, and similar information. As will be understood, a large groove generally requires a larger support than a small groove, if the deformations during sintering are to be decreased similarly.

In some embodiments, at least a part of the gap of the groove faces upward, which may also be seen as the groove facing upward.

In some embodiments, the support is positioned approximately at a center of the groove. This is especially relevant for embodiments wherein the support covers a relatively small part of the groove.

In some embodiments, the adapting 204 the model by adding a support comprises adding a plurality of supports, each connecting the sides of the groove.

In some embodiments, the thickness of the support is between 10% and 50% of the width of the groove. In some embodiments, the thickness of the support is between 20% and 30% of the thickness of the groove.

In some embodiments, the hole 125 of the support has a diameter of at least 3 times the diameter of the largest particle size of the powder. In some embodiments, the hole 125 has a diameter of 5-10 times the diameter of the largest particle size of the powder, measured as the D90 of the powder.

An example of an additive manufacturing system 600 according to an embodiment, operable for performing methods according to the present disclosure will now be described.

The additive manufacturing system 600 comprises an additive manufacturing device suitable for performing the method steps according to the present disclosure. Such an additive manufacturing device comprises at least a powder bed, means for supplying powder, and means for fusing the powder together. As will be understood, the additive manufacturing device may further comprise additional components as well. In some embodiments, the additive manufacturing device may be a binder jet printer, and the means for using the powder together is a means for dispensing binder to the powder bed. The additive manufacturing system further comprises means for sintering the article, and may further comprise means for removing powder from the article.

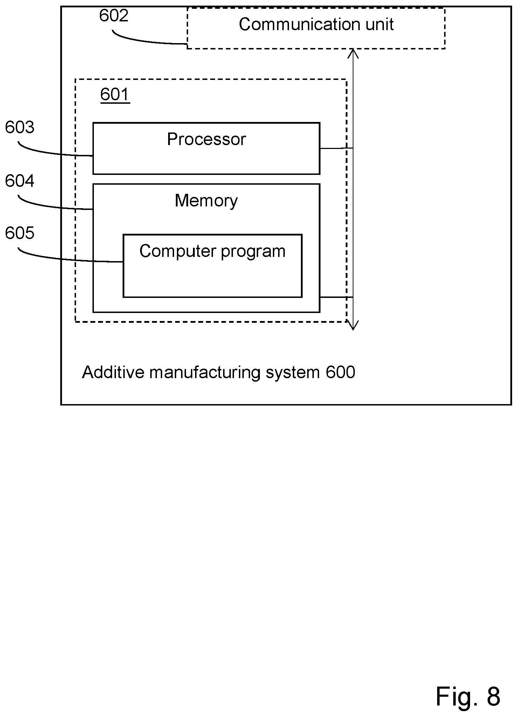

Looking now at Fig. 8, a block schematic of parts of the additive manufacturing system 600 according to an embodiment is shown. The additive manufacturing system 600 comprises processing circuitry 603 and a memory 604. The processing circuitry 603 may comprise one or more programmable processor, application-specific integrated circuits, field programmable gate arrays or combinations of these (not shown) adapted to execute instructions. The memory contains instructions executable by said processing circuitry, whereby the additive manufacturing system 600 is operative for obtaining a model of an article to be manufactured, wherein the article comprises a groove, the groove comprising two sides with a gap in between. The additive manufacturing system 600 is further operative for adapting the model by adding a support connecting the sides of the groove, additively manufacturing the article based on the adapted model, and removing loose powder from the groove. The additive manufacturing system 600 is further operative for sintering the additively manufactured article, and removing the support, thus obtaining a manufactured article.

The additive manufacturing system 600 that performs the method may be a group of devices, wherein functionality for performing the method are spread out over different physical, or virtual, devices of the system. In other words, the additive manufacturing system 600 may be a cloud-solution, i.e. the additive manufacturing system 600 may be deployed as cloud computing resources that may be distributed in the system.

According to an embodiment, the additive manufacturing system 600 is further operative for performing any other of the method steps described herein.

According to other embodiments, the additive manufacturing system 600 may further comprise a communication unit 602, which may be considered to comprise conventional means for communicating with other parts of an additive manufacturing system. The instructions executable by said processing circuitry 603 may be arranged as a computer program 605 stored e.g. in the memory 604. The processing circuitry 603 and the memory 604 may be arranged in a sub-arrangement 601. The sub-arrangement 601 may be a micro-processor and adequate software and storage therefore, a Programmable Logic Device, PLD, or other electronic component(s)/processing circuit(s) configured to perform the methods mentioned above.

The computer program 605 may comprise computer readable code means, which when run in an additive manufacturing system 600 causes the additive manufacturing system 600 to perform the steps described in any of the described embodiments of the additive manufacturing system 600. The computer program 605 may be carried by a computer program product connectable to the processing circuitry 603. The computer program product may be the memory 604. The memory 604 may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory 604. Alternatively, the computer program may be stored on a server or any other entity connected to the additive manufacturing system 600, to which it has access via the communication unit 602. The computer program may then be downloaded from the server into the memory 604.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method for manufacturing an article comprising a groove, comprising:
obtaining (202) a model of an article to be manufactured, the article comprising a groove, the groove comprising two sides with a gap in between;
adapting (204) the model by adding a support connecting the sides of the groove;
additively manufacturing (206) the article based on the adapted model;
removing (207) loose powder from the groove;
sintering (208) the additively manufactured article; and
removing (210) the support, thus obtaining a manufactured article.

2. The method according to any one of the previous claims, wherein the support is positioned above the gap of the groove.

3. The method according to any one of the previous claims, wherein the support covers a majority of the groove.

4. The method according to any one of the previous claims, wherein the support comprises a hole.

5. The method according to any one of the previous claims, wherein the dimensions of the support are adapted based on the properties of the groove.

6. The method according to any one of the previous claims, wherein at least a part of the gap of the groove faces upward.

7. The method according to any one of the previous claims, wherein the support is adapted to cover substantially the whole surface of the article in the planes in which it extends.

8. The method according to any one of the previous claims, comprising a plurality of supports, each connecting the sides of the groove.

9. The method according to any one of the previous claims, wherein the thickness of the support is between 10% and 50% of the width of the groove.

10. The method according to any one of the previous claims, wherein the support is a sintering support, adapted to support the article during sintering.

11. An additive manufacturing system (600) operable for additively manufacturing an article comprising a groove, the additive manufacturing system (600) comprising:
an additive manufacturing device;
processing circuitry (603); and
a memory (604), said memory (604) containing instructions executable by said processing circuitry (603), whereby said additive manufacturing system (600) is operative for:
obtaining a model of an article to be manufactured, the article comprising a groove, the groove comprising two sides with a gap in between;
adapting the model by adding a support connecting the sides of the groove;
additively manufacturing the article based on the adapted model;
removing loose powder from the groove;
sintering the additively manufactured article; and
removing the support, thus obtaining a manufactured article.

12. The additive manufacturing system (600) according to claim 11, further operative for performing the steps of a method according to any one of 2-10.

13. A computer program (605) comprising computer readable code means to be run in the additive manufacturing system (600), which computer readable code means when run in the additive manufacturing system (600) causes the additive manufacturing system (600) to perform the following steps:
obtaining a model of an article to be manufactured, the article comprising a groove, the groove comprising two sides with a gap in between;
adapting the model by adding a support connecting the sides of the groove;
additively manufacturing the article based on the adapted model;
removing loose powder from the groove;
sintering the additively manufactured article; and
removing the support, thus obtaining a manufactured article.

14. A carrier containing the computer program (605) according to claim 13, wherein the carrier is one of an electronic signal, optical signal, radio signal or computer readable storage medium.
